Europäisches Patentamt

European Patent Office

Office européen des brevets

(11) Veröffentlichungsnummer: **0 368 075**
**A2**

(12) **EUROPÄISCHE PATENTANMELDUNG**

(21) Anmeldenummer: 89119705.5

(51) Int. Cl.⁵: **G11B 23/023, G11B 33/04**

(22) Anmeldetag: 24.10.89

(30) Priorität: 08.11.88 DE 8813973 U

(43) Veröffentlichungstag der Anmeldung:
16.05.90 Patentblatt 90/20

(84) Benannte Vertragsstaaten:
AT CH DE FR GB IT LI

(71) Anmelder: **fischerwerke Artur Fischer GmbH & Co. KG**
**Weinhalde 14 - 18**
**D-7244 Waldachtal 3/Tumlingen(DE)**

(72) Erfinder: **Lange, Dietrich**
**Lerchenauerstrasse 29**
**D-8000 München(DE)**

(54) **Haltevorrichtung für die Aufbewahrung von Magnetbandkassetten, Compact-Disk-Platten oder dgl.**

(57) Haltevorrichtung für die Aufbewahrung von Magnetbandkassetten, Compact-Disks oder dgl. in ihren Aufbewahrungshüllen

Es sind Haltevorrichtungen für Magnetbandkassetten, Tonbänder oder für Compact-Disks bekannt, die als Standfächer, Aufbewahrungsregale oder Archivboxen ausgebildet sind.

Es wird eine Haltevorrichtung für die Aufbewahrung von Compact-Disks, Magnetbandkassetten oder dgl. vorgeschlagen, die eine platzsparende und übersichtliche Anordnung der Compact-Disks oder dgl. ermöglicht und eine umfassende Titelerkennung zuläßt, indem am Rahmen der Haltevorrichtung eine größere Anzahl von drehbar gelagerten, aneinandergereihten Haltebügeln vorgesehen sind, die aus einem stabilen Material gefertigt sind.

# Fig.3

EP 0 368 075 A2

## Haltevorrichtung für die Aufbewahrung von Magnetbandkassetten, Compact-DiskPlatten oder dgl.

Die Erfindung betrifft eine Haltevorrichtung für die Aufbewahrung von Magnetbandkassetten, Compact-Disks oder dgl. gemäß der Gattung des Hauptanspruchs.

Haltevorrichtungen für Magnetbandkassetten, Tonbänder oder für Compact-Disks sind in mehreren Ausführungen bekannt. So können diese als Standfächer ausgebildet sein, in welchen die Compact-Disks oder dgl. in dafür vorgesehene Rillen gestellt werden können, wobei für das Herausfinden eines bestimmten Titels die kleinen Titelbeschreibungen auf den Rückseiten der Plastikaufnahmebhälter für die Compact-Disks oder dgl. dienen müssen.

Auch sind als Standfächer ausgebildete Haltevorrichtungen bekannt, bei denen die Magnetbandkassetten oder Compact-Disks bzw. deren Aufbewahrungshüllen durch Umklappen und Durchblättern an den so sichtbar werdenden Frontseiten erkannt werden können.

Weiterhin sind Aufbewahrungsregale bekannt, die das Stapeln von Magnetbandkassetten oder dgl. in die Höhe und die Wandmontage erlauben, wobei allerdings zur Ermittlung eines bestimmten Titels ebenfalls nur die kleinen Titelbeschreibungen auf der Rückseite herangezogen werden können.

Auch sind Plastikbehälter bekannt, in die ähnlich einem Regal, die Magnetbandkassetten oder Compact-Disks auf einzelnen, beweglichen Schlitten untergebracht sind.

Schließlich sind Archivboxen erheblichen Umfanges, ähnlich übergroßer Diamagazinaufbewahrungskästen, bekannt, bei denen ein schubladenartiger Schlitten herausgezogen werden kann, auf welchem die Kassetten, Compact-Disks oder dgl. angeordnet sind.

Insgesamt ermöglichen diese Aufbewahrungsvorrichtungen jedoch lediglich eine eingeschränkte Titelübersicht hinsichtlich der an den für die Magnetbandkassetten oder Compact-Disks vorgesehenen Aufbewahrungshüllen befindlichen Titelbeschreibungen. Auch ergeben sich Nachteile daraus, daß die Aufbewahrungsvorrichtungen entweder nur als Standmodell für eine platzraubende Aufbewahrung auf einer Tisch- oder Schrankfläche vorzufinden sind.

Der Erfindung liegt daher die Aufgabe zugrunde, eine Haltevorrichtung für die Aufbewahrung von Compact-Disks, Magnetbandkassetten oder dgl. zu schaffen, die eine platzsparende, sowie eine übersichtliche Anordnung der Compact-Disks, Kassetten oder dgl. ermöglicht und eine umfassende Titelerkennung zuläßt.

Die Lösung dieser Aufgabe wird bei einer Haltevorrichtung der eingangs genannten Gattung durch die im kennzeichnenden Teil des Hauptanspruchs angegebenen Merkmale erhalten. Durch die Anordnung von am Rahmen der Halterung drehbar gelagerten, aneinandergereihten Haltebügeln wird es ermöglicht, die in den Haltebügeln einliegenden Compact-Disks oder Kassetten durchzublättern und somit die an den beiden Hauptseiten angebrachten Informationen zu lesen.

Dadurch, daß die Haltebügel kurze Seitenarme mit Klemmfedern und Seitenführungen aufweisen, die so bemessen sind, daß die Aufbewahrungshüllen eingeschoben werden können, wird ein seitliches Abgleiten der Hüllen beim Einschieben verhindert. Durch die Federzungen wird ein leichtes Klemmen der eingeschobenen Aufbewahrungshüllen gewährleistet.

Durch die um eine Bügelachse ermöglichte Drehbarkeit der Haltebügel wird die Schwenkbarkeit der eingeschobenen Hüllen ermöglicht. Der Drehwinkel wird dabei von dem benachbarten Haltebügel begrenzt, welcher ebenfalls mitschwenkt.

Die am Rahmen und an den winkelförmigen Füßen angebrachten Vertiefungen oder Bohrungen ermöglichen das Anbringen von Verbindungselementen (Metallbügeln, Schrauben, Nieten oder dgl.) und damit das Zusammenfassen mehrerer Einheiten aufoder nebeneinander zu großen Regalen.

Die am Rahmen mittels Schrauben befestigten Füße können beim Stapeln auch abgeschraubt werden. Durch die ebenfalls an den winkelförmigen Füßen angebrachten Vertiefungen oder Bohrungen ist es ermöglicht, daß gesamte System, auf dem Kopf stehend, stabil von unten an ein Bücherregal anzuschrauben.

Die Erfindung wird nachfolgend anhand der Zeichnung näher erläutert.

Es zeigen:

Figur 1 eine erfindungsgemäße Haltevorrichtung von vorne betrachtet,

Figur 2 die in Figur 1 dargestellte Haltevorrichtung von oben betrachtet und

Figur 3 die erfindungsgemäße Haltevorrichtung im Querschnitt entlang der aus Figur 1 ersichtlichen Linie A - B

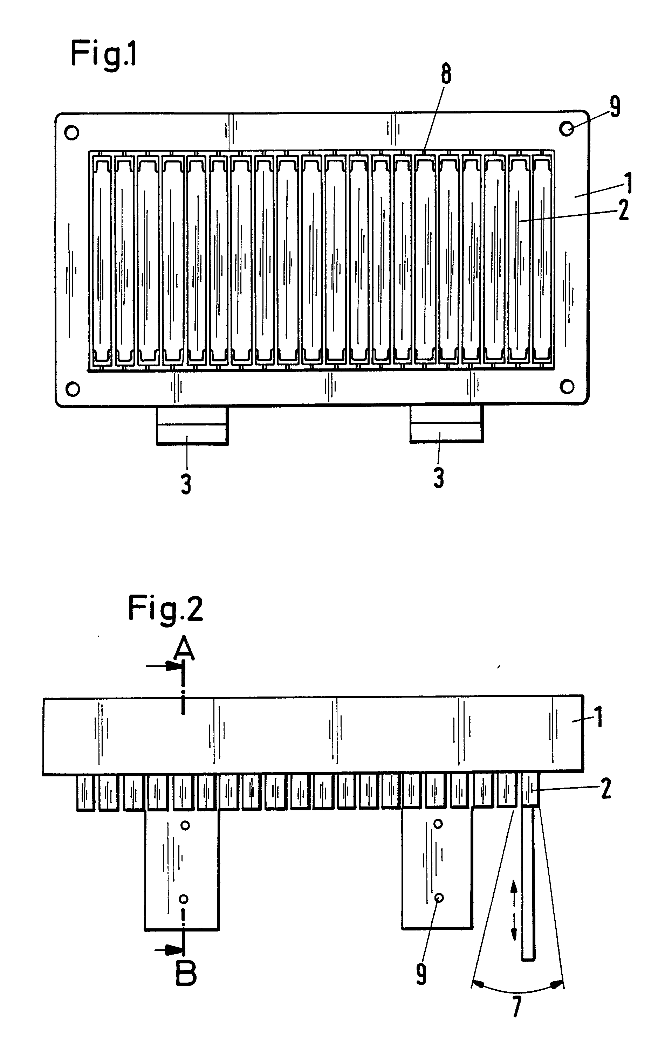

Die in Figur 1 dargestellte Haltevorrichtung besteht aus einem Rahmen 1, der mehrere drehbare und in einer Reihe angeordnete Haltebügel 2 aufnimmt. An diesen sind winkelförmige Füße 3 angeschraubt.

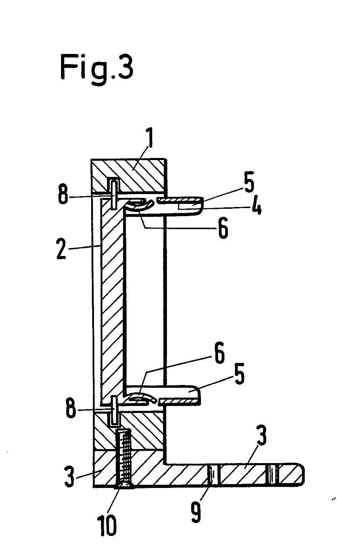

An den Haltebügeln 2 sind, aus Figur 3 ersichtliche, Seitenarme 4 angeordnet, in welche jeweils eine Aufbewahrungshülle eingeschoben werden kann. Die Seitenarme 4 besitzen Seitenführungen 5, die ebenfalls aus Figur 3 ersichtlich sind. An den Innenflächen der Seitenführungen 5 sind Federzungen 6 angebracht, die ein leichtes Klemmen der eingeschobenen Hüllen gewährleisten.

Die in Figur 1 dargestellte Haltevorrichtung besteht aus einem Rahmen 1, der mehrere drehbare und in einer Reihe angeordnete Haltebügel 2 aufnimmt. An diesen sind winkelförmige Füße 3 angeschraubt.

An den Haltebügeln 2 sind, aus Figur 3 ersichtliche, Seitenarme 4 angeordnet, in welche jeweils eine Aufbewahrungshülle eingeschoben werden kann. Die Seitenarme 4 besitzen Seitenführungen 5, die ebenfalls aus Figur 3 ersichtlich sind. An den Innenflächen der Seitenführungen 5 sind Federzungen 6 angebracht, die ein leichtes Klemmen der eingeschobenen Hüllen gewährleisten.

Der aufgrund der Verschwenkbarkeit der Haltebügel 2 ermöglichte, aus Figur 2 ersichtliche Drehwinkel 7 wird jeweils vom benachbarten Haltebügel 2 begrenzt.

Die an der Rückwand der Haltebügel vorgesehenen Bügelachsen, um die die Haltebügel 2 beweglich sind, werden durch Achszipfel 8 gebildet. Diese sind sowohl aus Figur 1 als auch aus Figur 3 ersichtlich.

Am Rahmen 1 sowie an den Füßen 3 sind Bohrungen 9 vorgesehen, die das Anbringen von Verbindungselementen ermöglichen.

Die abgewinkelten Füße 3 sind am Rahmen 1 durch aus Figur 3 ersichtliche Schrauben 10 befestigt.

**Ansprüche**

1. Haltevorrichtung für die Aufbewahrung von Magnetbandkassetten, Compact-Disks oder dgl. in ihren Aufbewahrungshüllen, **dadurch gekennzeichnet**, daß die Haltevorrichtung aus einem Rahmen (1) eines stabilen Materials besteht, der eine größere Anzahl von drehbar gelagerten und aneinandergereihten Haltebügeln (2) aufweist, die ebenfalls aus einem stabilen Material gefertigt sind.

2. Haltevorrichtung nach Anspruch 1, **dadurch gekennzeichnet**, daß die Haltebügel (2) kurze Seitenarme (4) mit Klemmfedern (6) und Seitenführungen (5) aufweisen, die so bemessen sind, daß die Aufbewahrungshüllen eingeschoben werden können.

3. Haltevorrichtung nach Anspruch 1 und 2, **dadurch gekennzeichnet**, daß die Haltebügel (2) drehbar gelagert in einer Reihe montiert sind und dabei der Abstand der Bügel zueinander so bemessen ist, daß ein reduzierter Drehwinkel (7) der Bügelachsen (8) ermöglicht wird.

4. Haltevorrichtung nach den Ansprüchen 1 bis 3, **dadurch gekennzeichnet**, daß der Rahmen und die Füße kleine Vertiefungen (9) aufweisen.

5. Haltevorrichtung nach einem der vorhergehenden Ansprüche, **dadurch gekennzeichnet**, daß die Füße (3) am Rahmen (1) mittels Schrauben (10) oder dgl. befestigt sind.

6. Haltevorrichtung nach Anspruch 3, **dadurch gekennzeichnet**, daß die an der Rückwand der Haltebügel (2) vorgesehenen Bügelachsen (8) durch in Bohrungen des Rahmens (1) lagernden Achszipfeln (8) gebildet sind.

## Fig.1

## Fig.2

# Fig.3